# EUROPÄISCHE PATENTSCHRIFT

(11) **EP 2 919 738 B1**
(45) Veröffentlichungstag und Bekanntmachung des Hinweises auf die Patenterteilung: **13.02.2019**
(21) Anmeldenummer: 13785393.3
(22) Anmeldetag: 22.10.2013
(51) Int. Cl.: A61H 1/00, A61H 23/02, A63B 22/18

(54) **VORRICHTUNG, INSBESONDERE ZUM GLEICHGEWICHTSTRAINING, MIT ZUMINDEST EINER BEWEGLICHEN PLATTFORM**
DEVICE, PARTICULARLY FOR BALANCE TRAINING, WITH AT LEAST ONE MOVABLE PLATFORM
DISPOSITIF, EN PARTICULIER D'ENTRAÎNEMENT DE L'ÉQUILIBRE, COMPRENANT AU MOINS UNE PLATE-FORME MOBILE

(30) Priorität: 14.11.2012 DE 102012110968
(43) Veröffentlichungstag der Anmeldung: 23.09.2015
(73) Patentinhaber: Airbus Defence and Space GmbH, 82024 Taufkirchen (DE)
(72) Erfinder: KERN, Peter, 88682 Salem (DE); KÜBLER, Ullrich, 88677 Markdorf (DE); KOLVENBACH, Hendrik, René, 50999 Köln (DE)
(74) Vertreter: Daub, Thomas
(86) Internationale Anmeldenummer: PCT/EP2013/072085
(87) Internationale Veröffentlichungsnummer: WO 2014/075878

(56) Entgegenhaltungen:
- US-A1- 2004 198 507
- US-A1- 2011 256 983
- US-B1- 6 176 817

## Beschreibung

### Stand der Technik

Die Erfindung betrifft eine Vorrichtung nach dem Oberbegriff des Anspruchs 1.

Dokument US6176817 offenbart eine Vorrichtung zum Gleichgewichtstraining nach dem Oberbegriff des Anspruchs 1.

Dokument US2011/256983 offenbart eine Vorrichtung zum Gleichgewichtstraining mit einer Steuereinheit.

Vorrichtungen zum Gleichgewichts- und/oder feinmotorischen Training weisen zumindest eine bewegliche Plattform, die in zumindest zwei Dimensionen schwingend bewegbar ist, auf. Es sind Vorrichtungen mit Dämpfungselementen zu einer Dämpfung von Bewegungen der beweglichen Plattform bekannt, die beispielsweise als kunststoffummantelte Stahlseile, welche die Plattform hängend befestigen und aufgrund von Materialeigenschaften der Kunststoffummantelung dämpfend wirken, ausgebildet sind. Die bekannten Dämpfungselemente können lediglich sehr grob eingestellt werden und eine Änderung von Dämpfungseigenschaften während eines Betriebs der Vorrichtung ist nicht möglich.

Die Aufgabe der Erfindung besteht insbesondere darin, eine gattungsgemäße Vorrichtung mit verbesserten Eigenschaften hinsichtlich einer Anpassbarkeit einer Dämpfung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die vorliegende Erfindung stellt eine Vorrichtung nach Anspruch 1 und ein Verfahren zur Verwendung der Vorrichtung nach Anspruch 12 bereit.

Die Erfindung geht aus von einer Vorrichtung, insbesondere zum Gleichgewichts- und/oder feinmotorischen Training, mit zumindest einer beweglichen Plattform, die in zumindest zwei Dimensionen schwingend bewegbar ist, mit zumindest einer Dämpfungseinheit zu einer Dämpfung von Bewegungen der beweglichen Plattform. Unter einer "beweglichen Plattform, die in zumindest zwei Dimensionen schwingend bewegbar ist" soll insbesondere ein Plattform, vorzugsweise eine ebene Plattform, verstanden werden, die derart gelagert ist, beispielsweise mittels einer Aufhängung an einem Rahmengerüst, dass sie zumindest entlang zweier senkrecht zueinander verlaufenden Richtungen in einer Ebene, vorzugsweise einer Ebene parallel zu einem Boden, auf dem die Vorrichtung aufgestellt ist, innerhalb eines vorgegebenen Auslenkungsbereichs ausgelenkt werden kann und die eine Rückstellung der Auslenkung auf eine Ruhelage aufweist. Insbesondere kann die bewegliche Plattform zusätzlich zu der Auslenkung in zwei Richtungen in der Ebene noch in eine Richtung senkrecht zu der Ebene gekippt oder die bewegliche Plattform kann ohne eine translatorische Bewegung dreidimensional um Roll- und Gierwinkel ausgelenkt werden. Die Plattform weist eine Standoberfläche auf, auf die sich eine Person aufstellt, die die Plattform aufgrund eigener Bewegungen auslenkt und/oder einer Auslenkung der Plattform durch eine äußere Anregung entgegenwirkt. Vorzugsweise ist die Standoberfläche eben ausgeführt, grundsätzlich kann die Standoberfläche jedoch auch gekrümmt oder in anderen, von einer ebenen Fläche verschiedenen Grundformen, beispielsweise halbkugelförmig, ausgeführt sein. Die Vorrichtung ist insbesondere zu einer Verwendung zu einem Training zur Stärkung des Gleichgewichtssinns oder zu einer Therapie von Störungen des Gleichgewichtssinns vorgesehen. Unter einer "Dämpfungseinheit zu einer Dämpfung von Bewegungen der beweglichen Plattform" soll insbesondere eine Einheit verstanden werden, die dazu vorgesehen ist, eine zu einer Auslenkung der Plattform führende Kraft zu dämpfen und somit einer Auslenkung der Plattform einen bestimmten Widerstand entgegenzusetzen.

Es wird vorgeschlagen, dass die Dämpfungseinheit ein zentrales, zumindest teilweise entlang einer Nullachse einer Ruhelage der Plattform verlaufendes Verbindungselement zur Verbindung von Plattform und Dämpfungseinheit und zu einer Übertragung einer zumindest zweidimensionalen Bewegung der Plattform aufweist. Unter einer "Nullachse einer Ruhelage der Plattform" soll insbesondere eine Achse verstanden werden, die senkrecht auf einer Ebene der Plattform steht und in einer Ruhelage der Plattform durch ein geometrisches Zentrum der Plattform verläuft. Unter einem "Verbindungselement" soll insbesondere ein Element verstanden werden, das dazu vorgesehen ist, eine Auslenkung der Plattform aus der Ruhelage auf zumindest ein weiteres Element zu übertragen. Vorzugsweise ist das Verbindungselement als biegeschlaffes Element ausgebildet. Unter einem "zentralen Verbindungselement" soll insbesondere verstanden werden, dass das Verbindungselement zumindest in einem Bereich nahe der Nullachse der Ruhelage der Plattform angeordnet ist und dass das Verbindungselement betragsmäßig gleiche Auslenkungen der Plattform in einander gegenüberliegende Richtungen in eine gleiche Auslenkung umsetzt. Insbesondere kann durch das zentrale Verbindungselement eine Dämpfung von Bewegungen der Plattform durch eine Dämpfung einer Bewegung des zentralen Verbindungselements erfolgen. Insbesondere ist das zentrale Verbindungselement dazu vorgesehen, die zumindest zweidimensionale Bewegung eindimensional auf die Dämpfungseinheit zu übertragen. Es kann insbesondere eine Reduktion einer Anzahl benötigter Dämpfungselemente zu einer Dämpfung von Bewegungen der Plattform erreicht werden.

Ferner wird vorgeschlagen, dass das zentrale Verbindungselement die zumindest zweidimensionale Bewegung der Plattform eindimensional auf die Dämpfungseinheit überträgt. Es kann insbesondere eine Reduktion einer benötigten Anzahl von Dämpfungselementen der Dämpfungseinheit erreicht werden.

Ferner wird vorgeschlagen, dass die Dämpfungseinheit zumindest eine Bewegungswandlungseinheit aufweist, die einen rotatorischen Anteil der zumindest zweidimensionalen Bewegung der Plattform in eine Drehbewegung des zentralen Verbindungselements um eine eigene Achse umwandelt. Insbesondere verbleibt ein Betrag einer translatorischen Auslenkung der Plattform aus der Ruhelage als eine Auslenkung des zentralen Verbindungselements. Insbesondere wird der rotatorische Anteil der Bewegung der Plattform in einen rotatorischen Anteil einer Bewegung des zentralen Verbindungselements in einem Teilbereich des zentralen Verbindungselements, der zwischen der beweglichen Plattform und der Bewegungswandlungseinheit angeordnet ist, umgesetzt und dieser rotatorische Anteil der Bewegung des zentralen Verbindungselements in eine Drehbewegung des zentralen Verbindungselements um die eigene Achse umgewandelt. Insbesondere wird somit die zumindest zweidimensionale Bewegung der Plattform in eine eindimensionale Bewegung des zentralen Verbindungselements umgesetzt. Unter einer "Bewegungswandlungseinheit" soll insbesondere eine Einheit verstanden werden, die dazu vorgesehen ist, eine Bewegung in einer rotatorischen oder translatorischen Richtung in eine Bewegung in eine andere rotatorische oder translatorische Richtung umzuwandeln. Vorzugsweise ist die Bewegungswandlungseinheit dazu vorgesehen, eine Dimensionalität einer Bewegung zu reduzieren, indem beispielsweise eine zweidimensionale Bewegung mit einer rotatorischen Komponente in eine rein translatorische Bewegung in einer Dimension umgesetzt wird. Vorzugsweise umfasst die Bewegungswandlungseinheit ein Element, um das das zentrale Verbindungselement sich drehen kann, um den rotatorischen Anteil der Bewegung in eine Drehung um die Achse des zentralen Verbindungselements umzusetzen. Es kann insbesondere eine Reduktion einer Anzahl benötigter Dämpfungselemente erreicht werden, indem nur noch eine Dämpfung der translatorischen Auslenkung der Plattform aus der Ruhelage abgedämpft werden muss.

Ferner wird vorgeschlagen, dass die Bewegungswandlungseinheit eine Hülse oder eine Bohrung mit einer abgerundeten Öffnung aufweist. Insbesondere ist die Hülse oder Bohrung mit abgerundeter Öffnung dazu vorgesehen, einen rotatorischen Anteil einer Bewegung des zentralen Verbindungselements in eine Drehung um die eigene Achse des zentralen Verbindungselements umzusetzen, indem das zentrale Verbindungselement um einen Kontaktpunkt mit der Hülse oder Bohrung an der abgerundeten Öffnung rotiert. Grundsätzlich kann in alternativen Ausgestaltungen die Öffnung von einer scharfkantigen anstatt einer abgerundeten Öffnung gebildet sein. Es kann insbesondere eine konstruktiv einfache Bewegungswandlungseinheit erreicht werden.

Ferner wird vorgeschlagen, dass das zentrale Verbindungselement zumindest teilweise von einem Seilelement gebildet ist. Unter einem "Seilelement" soll insbesondere eine aus natürlichen oder künstlichen Fasern oder aus metallenen Drähten, wobei die Fasern oder Drähte verdrillt sind, bestehendes, biegeschlaffes längliches Element verstanden werden, das zu einer Übertragung von Zugkräften vorgesehen ist. Insbesondere ist das Seilelement von einem Stahlseil aus Stahldrähten gebildet. Insbesondere kann ein Seilelement eine Beschichtung, eine Hülse oder eine Ummantelung aus einem gleichen oder einem anderen Material als ein Material der Fasern oder Drähte aufweisen. Grundsätzlich kann das zentrale Verbindungselement zumindest teilweise von einem Kettenelement gebildet sein. Es kann insbesondere ein einfach herstellbares und günstiges zentrales Verbindungselement erreicht werden.

Ferner wird vorgeschlagen, dass die Dämpfungseinheit zumindest ein Federelement aufweist. Unter einem "Federelement" soll insbesondere ein makroskopisches Element verstanden werden, das in einem normalen Betriebszustand um zumindest 10 %, insbesondere um wenigstens 20 %, vorzugsweise um mindestens 30 % und besonders vorteilhaft um zumindest 50 % elastisch in zumindest einer Länge veränderbar ist und das insbesondere eine von einer Veränderung der Länge abhängige und vorzugsweise zu der Veränderung proportionale Gegenkraft erzeugt, die der Veränderung entgegenwirkt. Unter einer "Länge" eines Elements soll insbesondere ein maximaler Abstand zweier Punkte einer senkrechten Projektion des Elements auf eine Ebene verstanden werden. Unter einem "makroskopischen Element" soll insbesondere ein Element mit einer Erstreckung von zumindest 1 mm, insbesondere von wenigstens 5 mm, vorzugsweise von mindestens 10 mm und besonders bevorzugt von mindestens 50 mm verstanden werden. Insbesondere ist das Federelement mit dem zentralen Verbindungselement verbunden und setzt einer Auslenkung des zentralen Verbindungselements einen von einer Vorspannung abhängigen Widerstand entgegen, so dass Auslenkungen in eine Richtung abgedämpft werden. Das Federelement kann als ein linear elastisch verformbares Element oder als ein Torsionsfederelement ausgebildet sein. Grundsätzlich kann anstelle von oder zusätzlich zu einem Federelement die Dämpfungseinheit ein zusätzliches Dämpfungselement umfassen, das seriell mit oder parallel zu dem Federelement in der Dämpfungseinheit angeordnet sein kann. Auch ist es prinzipiell vorstellbar, eine Anzahl von Gruppen von parallel zueinander angeordneten Federelementen und zusätzlichen Dämpfungselementen zu verwenden, wobei die Anzahl von Gruppen zueinander parallel und/oder seriell geschaltet ist. Das zusätzliche Dämpfungselement kann von einem Element mit inneren Dämpfungseigenschaften, beispielsweise einem Gummiseil oder einem umsponnenes Gummiseil mit einer nichtlinearen Lastcharakteristik, gebildet sein. Das zusätzliche Dämpfungselement kann mit dem Federelement integriert ausgeführt sein. Es kann insbesondere eine konstruktiv einfach ausgeführte Dämpfungseinheit erreicht werden.

Ferner wird eine Entdralleinheit zu einer Verbindung des zentralen Verbindungselements und des Federelements, das eine Drehung des zentralen Verbindungselements um die eigene Achse ermöglicht, vorgeschlagen. Unter einer "Entdralleinheit" soll insbesondere eine Einheit verstanden werden, die an einem Element, insbesondere dem zentralen Verbindungselement, an einem Ende befestigt ist und eine Drehung des Elements um die eigene Achse innerhalb des Elements ermöglicht, wobei die Drehung des Elements in eine interne Drehung der Entdralleinheit umgesetzt wird. Es kann insbesondere eine konstruktiv einfache Verbindung des zentralen Verbindungselements und des Federelements erreicht werden.

Ferner wird eine Einstelleinheit, die zu einer Einstellung einer Dämpfungsstärke vorgesehen ist, vorgeschlagen. Unter einer "Einstelleinheit" soll insbesondere eine Einheit verstanden werden, die manuell oder auf elektronischem Weg gesteuert auf die Dämpfungseinheit einwirkt und eine Dämpfungsstärke der Dämpfungseinheit und somit den möglichen Bewegungsradius der Plattform bei einer gegebenen Auslenkungskraft verändert. Vorzugsweise ist die Einstelleinheit dazu vorgesehen, die Dämpfungsstärke während eines Betriebs der Vorrichtung zu verändern. Es kann insbesondere ein flexibel auf unterschiedliche Bedingungen anpassbare Vorrichtung erreicht werden.

Ferner wird vorgeschlagen, dass die Einstelleinheit einen elektrischen Aktuator aufweist. Unter einem "elektrischen Aktuator" soll insbesondere ein mechatronisches Bauteil verstanden werden, das dazu vorgesehen ist, elektrische Signale in eine Bewegung, insbesondere in eine Linearbewegung, umzusetzen. Insbesondere ist der elektrische Aktuator dazu vorgesehen, eine Vorspannung des Federelements einzustellen. Insbesondere ist der Aktuator zu einer stufenlosen Einstellung der Vorspannung vorgesehen. Es kann insbesondere eine kostengünstig realisierbare und einfache ansteuerbare, stufenlose Einstellungseinheit erreicht werden.

Ferner wird vorgeschlagen, dass die Dämpfungseinheit ein unmittelbar einstellbares Dämpfungselement aufweist. Unter einem "unmittelbar einstellbaren Dämpfungselement" soll insbesondere ein Dämpfungselement verstanden werden, dessen Dämpfungsstärke mittels einer direkten elektrischen Ansteuerung, insbesondere ohne vorherige Ansteuerung eines Aktuators zur Anpassung einer Vorspannkraft, oder durch Anlegen eines äußeren elektrischen und/oder magnetischen Felds eingestellt werden kann. In alternativen Ausgestaltungen kann die Dämpfungseinheit anstelle von oder zusätzlich zu einem unmittelbar einstellbaren Dämpfungselement und/oder Federelement auch eine Wirbelstrombremse oder eine Reibbremse aufweisen. Es kann insbesondere konstruktiv einfach eine stufenlose und schnell erfolgende Einstellung einer Dämpfungsstärke erreicht werden.

Ferner wird vorgeschlagen, dass das unmittelbar einstellbare Dämpfungselement von einem elektrorheologischen Dämpfer und/oder einem magnetorheologischen Dämpfer gebildet ist. Unter einem "elektrorheologischen Dämpfer" soll insbesondere ein Dämpfer mit einer elektrorheologischen Flüssigkeit verstanden werden. Unter einer "elektrorheologischen Flüssigkeit" soll insbesondere eine Flüssigkeit verstanden werden, in der elektrisch polarisierbare Partikel suspendiert sind und die eine Viskosität aufweist, die durch Anlegen eines elektrischen Felds durch Ausbildung von Dipolen bei den Partikeln verändert werden kann. Unter einem "magnetorheologischen Dämpfer" soll insbesondere ein Dämpfer mit einer magnetorheologischen Flüssigkeit verstanden werden. Unter einer "magnetorheologischen Flüssigkeit" soll insbesondere eine Flüssigkeit verstanden werden, in der magnetische polarisierbare Partikel suspendiert sind und die eine Viskosität aufweist, die durch Anlegen eines magnetischen Felds verändert werden kann. Es kann insbesondere ein konstruktiv einfaches und unmittelbar einstellbares Dämpfungselement erreicht werden.

Ferner wird vorgeschlagen, dass die Einstelleinheit eine Steuereinheit aufweist. Unter einer "Steuereinheit" soll insbesondere eine Einheit verstanden werden, die zumindest eine Recheneinheit und zumindest eine Speichereinheit aufweist, und die dazu vorgesehen ist, zumindest ein in der Speichereinheit gespeichertes Programm auszuführen und vorzugsweise eine Einstellung der Dämpfungsstärke in Abhängigkeit von dem gespeicherten Programm und/oder von einer Bewegung der Plattform vorzunehmen. Es kann insbesondere eine Vorrichtung erreicht werden, die leicht und schnell auf unterschiedliche Anforderungsmöglichkeiten angepasst werden kann und die insbesondere mit weiteren äußeren Geräten, beispielsweise einer Videospielkonsole, kombiniert werden kann.

Ferner wird vorgeschlagen, dass die Steuereinheit dazu vorgesehen ist, in Abhängigkeit von Messwerten zumindest eines Sensors zur Messung einer Auslenkung der Plattform die Dämpfungsstärke einzustellen. Der Sensor kann beispielsweise von einer Kamera, einem Induktionssensor oder einem weiteren, einem Fachmann als geeignet erscheinenden Sensor zur Positionsmessung gebildet sein. Es kann insbesondere eine flexibel anpassbare Vorrichtung erreicht werden.

Ferner wird vorgeschlagen, dass die Steuereinheit zur Ausführung eines Trainingsprogramms vorgesehen ist, bei dem eine langsame Absenkung der Dämpfungsstärke der Dämpfungseinheit durch eine Zunahme einer Auslenkungsamplitude der Plattform einer raschen Erhöhung der Dämpfungsstärke überlagert wird. Unter einer "langsamen Absenkung" und einer "raschen Erhöhung" der Dämpfungsstärke soll insbesondere verstanden werden, dass die Absenkung der Dämpfungsstärke langsam gegenüber der Erhöhung der Dämpfungsstärke abläuft. Unter einer "Zunahme einer Auslenkungsamplitude" soll insbesondere verstanden werden, dass aufgrund eines Nachlassens der Dämpfungsstärke und/oder aufgrund von Bewegungen einer Person auf der Plattform, beispielsweise von Ausgleichsbewegungen der Person bei einer externen Anregung, eine Amplitude von Auslenkungen der Plattform aus der Ruhelage zunimmt. Vorzugsweise wird eine Zunahme der Auslenkungsamplitude der Plattform durch die Recheneinheit der Steuereinheit ermittelt. Insbesondere dient die rasche Erhöhung der Dämpfungsstärke dazu, eine übergroße Zunahme der Auslenkungsamplitude der Plattform zu vermeiden. Insbesondere ist die langsame Absenkung der Dämpfungsstärke dazu vorgesehen, im Verlauf des Trainingsprogramms durch eine allmähliche Zunahme einer Auslenkungsamplitude bei einer gleichen Bewegung der Person auf der Plattform die Person im Verlauf des Trainingsprogramms immer wieder erneut zu fordern und somit einen hohen Trainingseffekt zu erzielen. Insbesondere können Stabilität und motorische Fähigkeiten einer das Trainingsprogramm durchlaufenden Person durch eine langsame Absenkung der Dämpfungsstärke und ein dadurch bedingtes Erweitern einer durch Bewegungen der Person bewirkten Auslenkung der Plattform einfach und sicher festgestellt und trainiert werden. Es kann insbesondere ein Trainingsprogramm mit einer hohen, personenspezifisch angepassten Stabilität erreicht werden.

Ferner wird vorgeschlagen, dass das zentrale Verbindungselement zu einer Dämpfung der Bewegung der Plattform mittels äußerer Reibung vorgesehen ist. Unter einer "äußeren Reibung" soll insbesondere eine Reibung des zentralen Verbindungselements mit einem weiteren, von dem zentralen Verbindungselement verschiedenen Bauteil der Vorrichtung verstanden werden. Insbesondere ist das zentrale Verbindungselement dazu vorgesehen, mit einer Oberfläche der Hülse oder Bohrung mit abgerundeter Öffnung gemäß der Euler-Eytelweinschen Gleichung zu reiben und kinetische Energie dissipativ in Wärmeenergie umzusetzen.

Es kann insbesondere eine zusätzliche Dämpfung von Bewegungen der beweglichen Plattform erreicht werden.

Die erfindungsgemäße Vorrichtung ist insbesondere dazu vorgesehen, zu einem Gleichgewichtstraining und/oder zur Therapie eingesetzt zu werden. In der Therapie kann die erfindungsgemäße Vorrichtung beispielsweise zum Muskeltraining eingesetzt werden.

Ferner wird eine Verwendung der erfindungsgemäßen Vorrichtung unter Bedingungen reduzierter Schwerkraft zu einem Gleichgewichts- und oder feinmotorischem Training und/oder zur Therapie vorgeschlagen. Unter "Bedingungen reduzierter Schwerkraft" sollen insbesondere Bedingungen verstanden werden, bei denen eine Schwerewirkung von maximal 0,9 g, vorteilhaft maximal 1*10⁻³ g, vorzugsweise maximal 1*10⁻⁶ g und besonders bevorzugt maximal 1*10⁻⁸ g wirksam ist. Die Schwerewirkung kann durch Gravitation und/oder künstlich durch eine Beschleunigung erzeugt sein. Mit "g" ist der Wert der Fallbeschleunigung auf der Erde von 9,81 m/s² bezeichnet. Es kann insbesondere eine einfach auf persönliche Bedürfnisse anpassbare Trainingsmöglichkeit unter Bedingungen reduzierter Schwerkraft bereitgestellt werden.

Ferner wird eine Verwendung der erfindungsgemäßen Vorrichtung in Zusammenwirkung mit einer Spielkonsole vorgeschlagen. Vorzugsweise umfasst die erfindungsgemäße Vorrichtung eine mit der Spielkonsole verbundene Steuereinheit, die entweder in die Spielkonsole integriert oder separat von dieser ausgebildet sein kann. Insbesondere ist die mit der Spielkonsole verbundene Steuereinheit von der Steuereinheit der Einstelleinheit gebildet.

Ferner wird eine Verwendung der erfindungsgemäßen Vorrichtung in Zusammenwirkung mit einer Spielkonsole unter Bedingungen reduzierter Schwerkraft vorgeschlagen.

Ferner wird eine Verwendung der erfindungsgemäßen Vorrichtung vorgeschlagen, bei der einer langsamen Absenkung der Dämpfungsstärke der Dämpfungseinheit eine rasche Erhöhung der Dämpfungsstärke durch eine Zunahme einer Auslenkungsamplitude der Plattform überlagert wird. Es kann insbesondere ein Trainingsprogramm mit einer hohen, personenspezifisch angepassten Stabilität erreicht werden.

Die erfindungsgemäße Vorrichtung soll hierbei nicht auf die oben beschriebene Anwendung und Ausführungsform beschränkt sein. Insbesondere kann die erfindungsgemäße Vorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Vorrichtung in einer Ansicht schräg von oben,
- Fig. 2: eine schematische Darstellung einer Dämpfungseinheit der erfindungsgemäßen Vorrichtung mit einer Feder und einem Aktuator und
- Fig. 3: eine schematische Darstellung einer alternativen Vorrichtung mit einer Dämpfungseinheit mit einem unmittelbar einstellbaren Dämpfungselement.

### Beschreibung der Ausführungsbeispiele

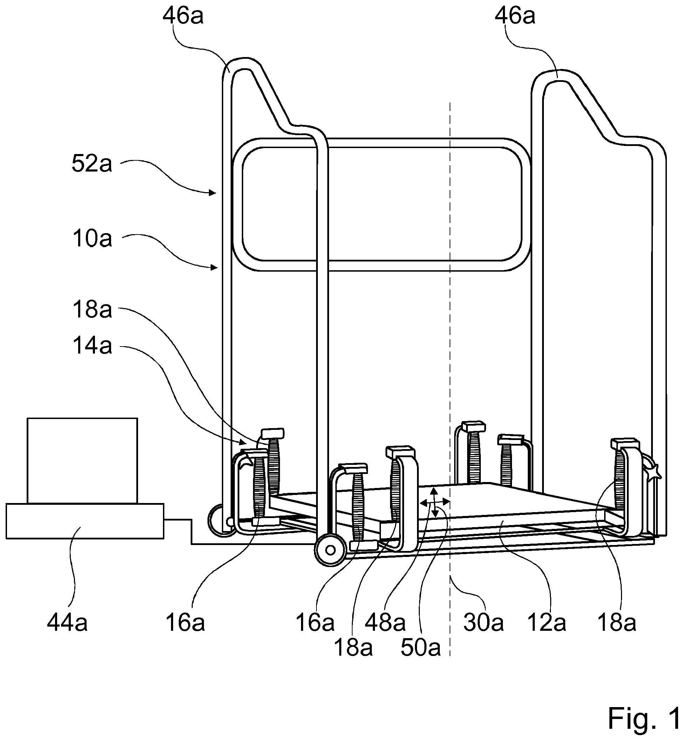

Fig. 1 zeigt eine erfindungsgemäße Vorrichtung 10a zum Gleichgewichtstraining mit einer beweglichen Plattform 12a, die in zumindest zwei Dimensionen schwingend bewegbar ist, mit einer Dämpfungseinheit 20a zu einer Dämpfung von Bewegungen der beweglichen Plattform 12a in einer Ansicht schräg von oben. Die bewegliche Plattform 12a ist mittels Aufhängungselementen 16a, 18a einer Aufhängungseinheit 14a an einem Rahmen 52a, der beispielsweise aus Aluminium hergestellt sein kann, schwingend gelagert, wobei die Aufhängungselemente 16a eine Lagerung in einer Bewegungsrichtung 48a der beweglichen Plattform 12a und die Aufhängungselemente 18a eine Lagerung in einer zu der Bewegungsrichtung 48a der beweglichen Plattform 12a senkrechten Bewegungsrichtung 50a der beweglichen Plattform 12a bereitstellen. Die Aufhängungselemente 16a, 18a sind dabei als kunststoffummantelte Stahlseile ausgeführt, welche über eine Deformation eines Materials eines Kunststoffmantels eine zusätzliche Dämpfung der Bewegung bewirken. Der Rahmen 52a weist zwei Griffe 46a auf, die insbesondere als Aufsteighilfe vorgesehen sind. Die Plattform 12a ist in zwei Bewegungsrichtungen 48a, 50a und somit zweidimensional auslenkbar. In alternativen Ausgestaltungen kann die Plattform 12a zusätzlich noch kippbar ausgebildet sein. Die Vorrichtung 10a ist zu einer Verwendung bei einem Gleichgewichtstraining bei einer Therapie vorgesehen und ferner dazu vorgesehen, in Zusammenwirkung mit einer Spielkonsole 44a eingesetzt zu werden. Durch Zusammenwirkung mit der Spielkonsole 44a kann insbesondere eine Simulation unterschiedlicher Bedingungen, beispielsweise für ein Training, ermöglicht werden. Eine Verwendung der Vorrichtung 10a kann auch unter Bedingungen reduzierter Schwerkraft, beispielsweise an Bord einer Raumstation oder einer Raumkapsel oder auf einem Mond, Planeten oder Asteroiden, für Trainingsmaßnahmen von Astronauten zum Muskelaufbau stattfinden. Die bewegliche Plattform 12a der Vorrichtung 10a wird durch Bewegungen einer auf einer ebenen Oberfläche der Plattform 12a stehenden Person ausgelenkt, wobei in alternativen Ausgestaltungen eine Oberfläche der Plattform 12a auch eine von einer ebenen Gestaltung abweichende Form aufweisen kann.

Ferner kann in alternativen Ausgestaltungen die bewegliche Plattform 12a durch Auslenkung mittels einer Auslenkeinheit, beispielsweise eines angebrachten Exzentermotors, in Bewegung versetzt werden, wobei die auf der Oberfläche stehende Person zur Erreichung eines Trainingseffekts die durch die Auslenkeinheit verursachte Bewegung ausgleichen muss.

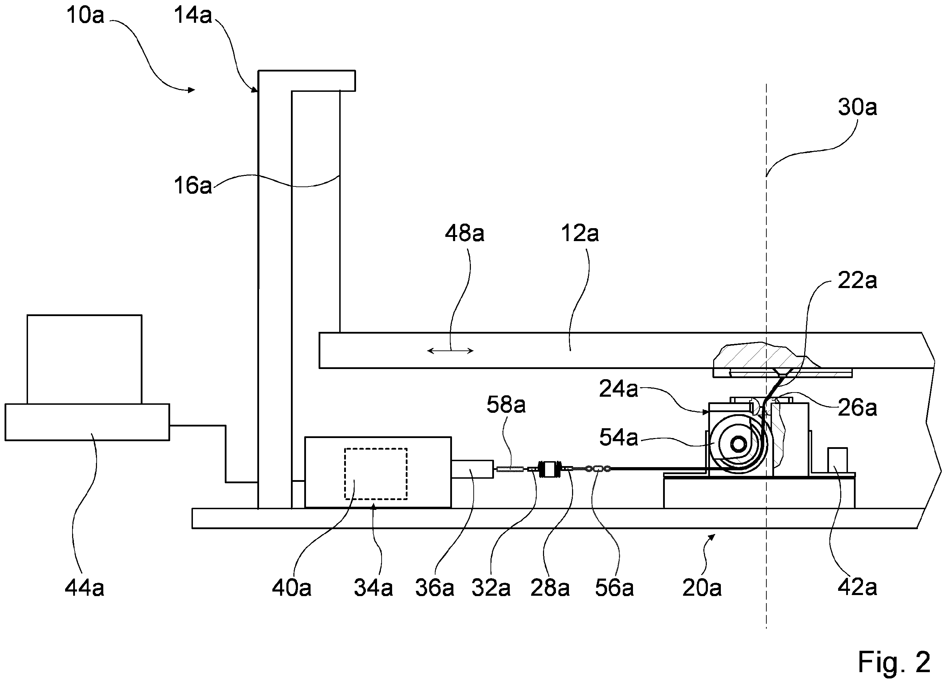

Die Dämpfungseinheit 20a (Fig. 2) weist ein zentrales, teilweise entlang einer Nullachse 30a einer Ruhelage der Plattform 12a verlaufendes Verbindungselement 22a zur Verbindung von Plattform 12a und Dämpfungseinheit 20a und zu einer Übertragung einer zumindest zweidimensionalen Bewegung der Plattform 12a auf. Das zentrale Verbindungselement 22a ist von einem Seilelement gebildet. Das Seilelement ist von einem Stahlseil gebildet, in alternativen Ausführungsvarianten kann das zentrale Verbindungselement 22a von einem Seilelement aus einem anderen Material als Stahl gebildet sein und beispielsweise eine Beschichtung aufweisen oder das zentrale Verbindungselement 22a kann zumindest teilweise von einer Kette gebildet sein.

Das zentrale Verbindungselement 22a überträgt die zumindest zweidimensionale Bewegung der Plattform 12a eindimensional auf die Dämpfungseinheit 20a. Die Dämpfungseinheit 20a weist eine Bewegungswandlungseinheit 24a auf, die einen rotatorischen Anteil der zumindest zweidimensionalen Bewegung der Plattform 12a in eine Drehbewegung des zentralen Verbindungselements 22a um eine eigene Achse umwandelt. Die Bewegungswandlungseinheit 24a weist eine Bohrung 26a in einem Körper mit einer abgerundeten Öffnung auf. In einer alternativen Ausgestaltung kann die Bewegungswandlungseinheit 24a anstatt einer Bohrung 26a in einem Körper eine Hülse mit einer abgerundeten Öffnung aufweisen. Grundsätzlich ist es ebenfalls vorstellbar, dass die Bohrung 26a oder die Hülse eine scharfkantige Öffnung aufweist. Das zentrale Verbindungselement 22a ist durch die Bohrung 26a durchgeführt, wobei es an der Öffnung anliegt. Bei einer Auslenkung der Plattform 12a aus der Ruhelage wird der translatorische Anteil der Auslenkung und somit der Bewegung der Plattform 12a in eine translatorische Bewegung des zentralen Verbindungselements 22a umgesetzt, während eine rotatorischer Anteil der Bewegung in eine Rotation eines Teilbereichs des zentralen Verbindungselements 22a zwischen Bohrung 26a und Plattform 12a um die Bohrung 26a der Bewegungswandlungseinheit 24a und bei mehrfacher Rotation um die Bohrung 26a in eine Drehung des zentralen Verbindungselements 22a um die eigene Achse umgesetzt wird. Somit wird der rotatorische Anteil der Bewegung der Plattform 12a herausgefiltert und es verbleibt nur ein Betrag der Auslenkung aus der Ruhelage zu einer Dämpfung durch die Dämpfungseinheit 20a. Grundsätzlich ist es vorstellbar, separate Dämpfungen für jeweils eine der zwei Bewegungsrichtungen 48a, 50a der Plattform 12a vorzusehen und anstelle des zentralen Verbindungselements 22a unterschiedliche Elemente zur Verbindung mit den separaten Dämpfungen vorzusehen.

Die Dämpfungseinheit 20a weist ein Federelement 32a auf, das mit dem zentralen Verbindungselement 22a verbunden ist und das einer translatorischen Bewegung des zentralen Verbindungselements 22a einen Widerstand aufgrund einer Rückstellkraft entgegensetzt, so dass eine Auslenkung der Plattform 12a über das zentrale Verbindungselement 22a abgedämpft wird. Ein zusätzliches Dämpfungselement 58a der Dämpfungseinheit 20a ist mit dem Federelement 32a in Reihe angeordnet. Das zusätzliche Dämpfungselement 58a ist als umsponnenes Gummiseil mit einer nichtlinearen Lastcharakteristik ausgebildet. In alternativen Ausgestaltungen der Dämpfungseinheit 20a kann das zusätzliche Dämpfungselement 58a der Dämpfungseinheit 20a parallel zu dem Federelement 32a angeordnet sein. Das zentrale Verbindungselement 22a ist ferner zu einer Dämpfung der Bewegung der Plattform 12a mittels äußerer Reibung vorgesehen, da das zentrale Verbindungselement 22a bei einer translatorischen Bewegung mit der Oberfläche der Bohrung 26a gemäß der Euler-Eytelweinschen Gleichung reibt und bei dieser äußeren Reibung kinetische Energie des zentralen Verbindungselements 22a und somit der Plattform 12a dissipiert wird, wodurch die Bewegung der Plattform 12a gedämpft wird. Insbesondere ist die äußere Reibung des zentralen Verbindungselements 22a mit der Oberfläche der Bohrung 26a zu einer Dämpfung eines Nachschwingens der Plattform 12a bei Auslenkung sowie von Bewegungen durch ein Aufsteigen einer Person vorgesehen. Im dargestellten Ausführungsbeispiel sind sowohl das zentrale Verbindungselement 22a als auch die Oberfläche der abgerundeten Öffnung der Bohrung 26a aus Stahl hergestellt, grundsätzlich können jedoch sowohl das zentrale Verbindungselement 22a als auch die Oberfläche der abgerundeten Öffnung der Bohrung 26a aus anderen Materialien hergestellt sein. Auf einer Strecke zwischen der Bohrung 26a und dem Federelement 32a wird das zentrale Verbindungselement 22a mittels einer Umlenkrolle 54a umgelenkt. Die Vorrichtung 10a weist eine von einem Wirbellager gebildete Entdralleinheit 56a zu einer Verbindung des zentralen Verbindungselements 22a und des Federelements 32a auf, das eine Drehung des zentralen Verbindungselements 22a um die eigene Achse ermöglicht, so dass eine Krafteinwirkung auf das Federelement 32a durch die Drehung des Verbindungselements 22a um die eigene Achse vermieden wird und das Federelement 32a lediglich mit einer Krafteinwirkung durch den Betrag der Auslenkung der Plattform 12a aus der Ruhelage beaufschlagt wird. Die von dem Wirbellager gebildete Entdralleinheit 56a ist über ein Hülsenelement 28a mit dem Federelement 32a verbunden. Es ist in alternativen Ausgestaltungen vorstellbar, dass die Dämpfungseinheit 20a zusätzlich zu oder anstelle von dem Federelement 32a beispielsweise eine Wirbelstrombremse oder eine Reibbremse zur Dämpfung aufweist.

Eine Einstelleinheit 34a ist zu einer Einstellung einer Dämpfungsstärke der Dämpfungseinheit 20a vorgesehen. Die Einstelleinheit 34a weist einen elektrischen Aktuator 36a auf, der eine Vorspannkraft auf das Federelement 32a einstellt. Über eine Einstellung der Vorspannkraft des Federelements 32a durch den Aktuator 36a wird die Dämpfungsstärke der Dämpfungseinheit 20a eingestellt, da zum einen durch eine erhöhte Vorspannkraft einer Auslenkung des zentralen Verbindungselements 22a durch die Plattform 12a eine höhere Gegenkraft entgegengesetzt wird und zum anderen aufgrund einer geänderten Kraft auf das zentrale Verbindungselement 22a eine Veränderung einer Reibkraft mit der Oberfläche der Bohrung 26a gemäß der Euler-Eytelweinschen Gleichung erreicht wird. Die Einstelleinheit 34a weist eine Steuereinheit 40a auf, die in die Einstelleinheit 34a integriert ist und die eine Recheneinheit und eine Speichereinheit mit darin gespeicherten Programmen umfasst. Die Steuereinheit 40a ist zu einer Ansteuerung der Aktuators 36a zu einer Anpassung der Dämpfung vorgesehen. Es können insbesondere verschiedene Dämpfungsstärken zu einer Anpassung der Vorrichtung 10a an unterschiedliche Bedürfnisse von Nutzern der Vorrichtung 10a, beispielsweise an unterschiedliche Grade einer Gleichgewichtsbeeinträchtigung von unterschiedlichen Personen, die ein Gleichgewichtstraining bei einer Therapie durchführen, eingestellt werden. Aufgrund des elektrischen Aktuators 36a kann eine Einstellung der Dämpfungsstärke stufenlos erfolgen. Die Steuereinheit 40a hat in ihrer Speichereinheit insbesondere verschiedene Trainingsprogramme mit unterschiedlichen Schwierigkeitsgraden, die über unterschiedliche Dämpfungsstärken realisiert werden, gespeichert, wobei in manchen Trainingsprogrammen der Schwierigkeitsgrad sich im Verlauf einer Ausführung des Trainingsprogramms ändert. Insbesondere kann mittels der Einstelleinheit 34a über die Steuereinheit 40a und den elektrischen Aktuator 36a eine Einstellung und Anpassung der Dämpfungsstärken während einer Benutzung der Vorrichtung 10a durchgeführt werden, wodurch eine Realisierung von Trainingsprogrammen mit unterschiedlichen Dämpfungsstärken und somit Schwierigkeitsgraden ohne eine Unterbrechung des Trainingsprogramms zu einer Anpassung der Dämpfungsstärke ermöglicht wird. Die Steuereinheit 40a ist zur Ausführung eines Trainingsprogramms vorgesehen, bei dem einer langsamen Absenkung der Dämpfungsstärke der Dämpfungseinheit 20a durch eine Zunahme einer Auslenkungsamplitude der Plattform 12a eine rasche Erhöhung der Dämpfungsstärke überlagert wird. Die rasche Erhöhung der Dämpfungsstärke dient dazu, eine übergroße Zunahme der Auslenkungsamplitude der Plattform12a zu vermeiden, während durch die langsame Absenkung der Dämpfungsstärke im Verlauf des Trainingsprogramm durch eine allmähliche Zunahme einer Auslenkungsamplitude bei einer gleichen Bewegung einer Person auf der Plattform 12a die Person im Verlauf des Trainingsprogramms immer wieder erneut gefordert und somit einen hohen Trainingseffekt erzielt wird. Insbesondere umfasst das Trainingsprogramm eine Anfangsphase mit einer hohen Dämpfungsstärke, in der Bewegungen der Person auf der Plattform 12a nur zu einer geringen Auslenkung der Plattform 12a führen. Nach der Anfangsphase erfolgt durch die langsame Absenkung der Dämpfungsstärke der Dämpfungseinheit 20a ein Übergang in eine eigentliche Trainingsphase, in der aufgrund der Absenkung der Dämpfungsstärke der Dämpfungseinheit 20a resultierenden Erhöhung der Auslenkungsamplitude der Plattform 12a durch die Steuereinheit 40a zu einer raschen Erhöhung der Dämpfungsstärke angesteuert wird und der langsamen Absenkung der Dämpfungsstärke überlagert wird, wodurch sich schnell wechselnde Trainingsbedingungen ergeben, durch die ein hoher Trainingseffekt erzielt wird.

Ferner ist es in Zusammenwirken mit der Spielkonsole 44a mittels der Steuereinheit 40a möglich, unterschiedliche Situationen für Trainingsspiele an der Spielkonsole 44a durch unterschiedliche Dämpfungsstärken zu simulieren, beispielsweise für ein Training von Astronauten. In alternativen Ausgestaltungen kann die Steuereinheit 40a in die Spielkonsole 44a integriert sein, so dass eine Ansteuerung der Einstelleinheit 34a durch die Spielkonsole 44a erfolgen kann. Ferner sind alternative Ausgestaltungen vorstellbar, bei denen eine Anpassung der Dämpfungsstärke per Hand an dem Federelement 32a vorgenommen wird. Die Steuereinheit 40a ist dazu vorgesehen, in Abhängigkeit von Messwerten zumindest eines Sensors 42a zur Messung einer Auslenkung der Plattform 12a die Dämpfungsstärke einzustellen. Der Sensor 42a ist von einer Kamera gebildet, über die die Steuereinheit 40a die Bewegung der Plattform 12a anhand einer Detektion von Markierungen an einer Unterseite der Plattform 12a erreicht. In alternativen Ausgestaltungen kann der Sensor 42a zur Positionsmessung der Plattform 12a von anderen, einem Fachmann als geeignet erscheinenden Sensoren 42a gebildet sein.

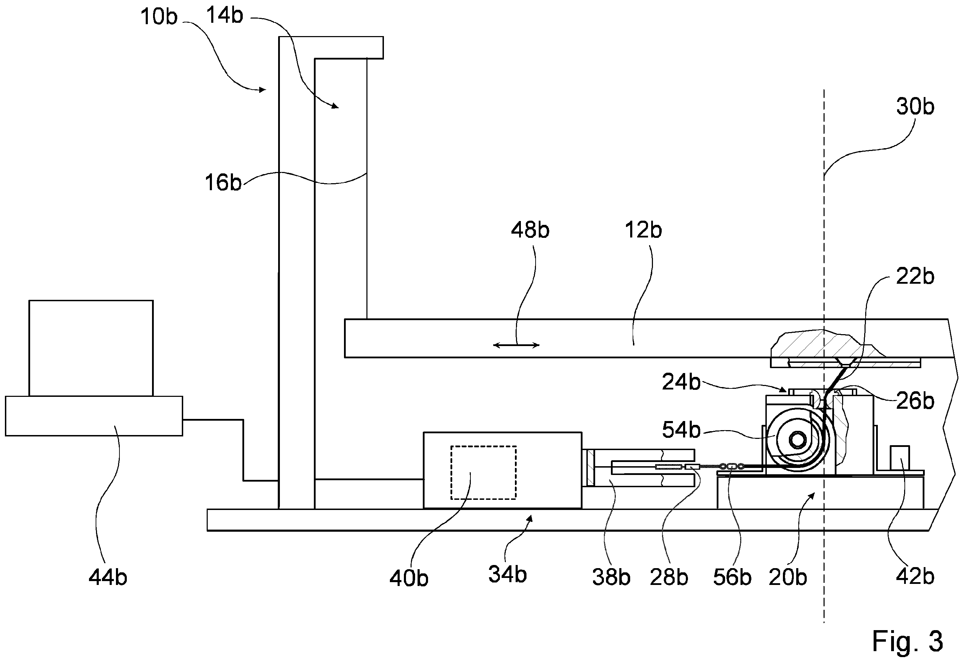

In der Figur 3 ist ein weiteres Ausführungsbeispiel der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 2 verwiesen werden kann. Zur Unterscheidung der Ausführungsbeispiele ist der Buchstabe a den Bezugszeichen des Ausführungsbeispiels in den Figuren 1 bis 2 nachgestellt. In den Ausführungsbeispielen der Figur 3 ist der Buchstabe a durch den Buchstaben b ersetzt.

Eine alternative Vorrichtung 10b zum Gleichgewichtstraining mit einer beweglichen Plattform 12b, die in zumindest zwei Dimensionen schwingend bewegbar ist, und mit einer Dämpfungseinheit 20b zu einer Dämpfung von Bewegungen der beweglichen Plattform 12b ist im Wesentlichen analog zu dem vorherigen Ausführungsbeispiel ausgeführt (Fig. 3). Die Dämpfungseinheit 20b der Vorrichtung 10b weist ein unmittelbar einstellbares Dämpfungselement auf, das von einem elektrorheologischen Dämpfer 38b gebildet ist. Der elektrorheologische Dämpfer 38b ist im Wesentlichen analog zu einem normalen Stoßdämpfer ausgeführt und weist eine Füllung mit einer Flüssigkeit auf, in die eine Suspension von Partikel eingebracht ist, in welchen durch Anlegen eines elektrischen Felds Dipole induziert werden. Durch die Induktion von Dipolen findet eine Anordnung der Partikel zu Ketten statt, wodurch sich eine Viskosität der Flüssigkeit und somit eine Dämpfungsstärke der Dämpfungseinheit 20b verändert. Das elektrische Feld wird von einer Einstelleinheit 34b erzeugt, die über das elektrische Feld die Dämpfungsstärke regelt. Die Einstelleinheit 34a umfasst eine Steuereinheit 40b, die eine Erzeugung des elektrischen Felds ansteuert. Über die Erzeugung des elektrischen Felds kann die Dämpfungsstärke dynamisch und stufenlos angepasst werden, wobei eine Anpassung auch während einer Benutzung der Vorrichtung 10b erreicht werden kann. Insbesondere kann die Steuereinheit 40b alleine oder in Zusammenwirken mit einer Spielkonsole 44a zumindest ein Trainingsprogramm ablaufen lassen, in dem während eines Ablaufs des Trainingsprogramms die Dämpfungsstärke angepasst wird. In alternativen Ausgestaltungen der Vorrichtung 10b kann das unmittelbar einstellbare Dämpfungselement der Dämpfungseinheit 20b beispielsweise als ein magnetorheologischer Dämpfer ausgebildet sein. Die Steuereinheit 40b ist zur Ausführung eines Trainingsprogramms vorgesehen, bei dem einer langsamen Absenkung der Dämpfungsstärke der Dämpfungseinheit 20b durch eine Zunahme einer Auslenkungsamplitude der Plattform 12b eine rasche Erhöhung der Dämpfungsstärke überlagert wird.

### Bezugszeichen

- 10: Vorrichtung
- 12: Plattform
- 14: Aufhängungseinheit
- 16: Aufhängungselement
- 18: Aufhängungselement
- 20: Dämpfungseinheit
- 22: Verbindungselement
- 24: Bewegungswandlungseinheit
- 26: Bohrung
- 28: Hülsenelement
- 30: Nullachse
- 32: Federelement
- 34: Einstelleinheit
- 36: Aktuator
- 38: Elektrorheologischer Dämpfer
- 40: Steuereinheit
- 42: Sensor
- 44: Spielkonsole
- 46: Griff
- 48: Bewegungsrichtung
- 50: Bewegungsrichtung
- 52: Rahmen
- 54: Umlenkrolle
- 56: Entdralleinheit
- 58: Zusätzliches Dämpfungselement

## Patentansprüche

1. Vorrichtung zum Training, insbesondere zum Gleichgewichts- und/oder feinmotorischen Training, mit zumindest einer beweglichen Plattform (12a-b), die in zumindest zwei Dimensionen schwingend bewegbar ist, mit zumindest einer Dämpfungseinheit (20a-b) zu einer Dämpfung von Bewegungen der beweglichen Plattform (12a-b), wobei die Dämpfungseinheit (20a-b) ein zentrales, zumindest teilweise entlang einer Nullachse (30a-b) einer Ruhelage der Plattform (12a-b) verlaufendes Verbindungselement (22a-b) zur Verbindung von Plattform (12a-b) und Dämpfungseinheit (20a-b) und zu einer Übertragung einer zumindest zweidimensionalen Bewegung der Plattform (12a-b) aufweist und wobei das zentrale Verbindungselement (22a-b) die zumindest zweidimensionale Bewegung der Plattform (12a-b) eindimensional auf die Dämpfungseinheit (20a-b) überträgt, **gekennzeichnet durch** eine Einstelleinheit (34a-b), die zu einer Einstellung einer Dämpfungsstärke vorgesehen ist, wobei die Einstelleinheit (34a-b) eine Steuereinheit (40a-b) aufweist und wobei die Steuereinheit (40a-b) dazu vorgesehen ist, in Abhängigkeit von Messwerten zumindest eines Sensors (42a-b) zur Messung einer, insbesondere beliebigen Auslenkung der Plattform (12a-b) die Dämpfungsstärke einzustellen.

2. Vorrichtung nach Anspruch 1, **dadurch gekennzeichnet, dass** die Dämpfungseinheit (20a-b) zumindest eine Bewegungswandlungseinheit (24a-b) aufweist, die einen rotatorischen Anteil der zumindest zweidimensionalen Bewegung der Plattform (12a-b) in eine Drehbewegung des zentralen Verbindungselements (22a-b) um eine eigene Achse umwandelt.

3. Vorrichtung nach Anspruch 2, **dadurch gekennzeichnet, dass** die Bewegungswandlungseinheit (24a-b) eine Hülse oder eine Bohrung (26a-b) mit einer abgerundeten Öffnung aufweist.

4. Vorrichtung nach einem der vorherigen Ansprüche, **dadurch gekennzeichnet, dass** das zentrale Verbindungselement (22a-b) zumindest teilweise von einem Seilelement gebildet ist.

5. Vorrichtung nach einem der vorherigen Ansprüche, **dadurch gekennzeichnet, dass** die Dämpfungseinheit (20a-b) zumindest ein Federelement (32a) aufweist.

6. Vorrichtung nach Anspruch 5, **gekennzeichnet durch** ein Hülsenelement (28a-b) zu einer Verbindung des zentralen Verbindungselements (22a-b) und des Federelements (32a), das eine Drehung des zentralen Verbindungselements (22a-b) um die eigene Achse ermöglicht.

7. Vorrichtung nach einem der vorhergehenden Ansprüche, **dadurch gekennzeichnet, dass** die Einstelleinheit (34a) einen elektrischen Aktuator (36a) aufweist.

8. Vorrichtung nach einem der vorhergehenden Ansprüche, **dadurch gekennzeichnet, dass** die Dämpfungseinheit (20b) ein unmittelbar einstellbares Dämpfungselement aufweist.

9. Vorrichtung nach Anspruch 8, **dadurch gekennzeichnet, dass** das unmittelbar einstellbare Dämpfungselement von einem elektrorheologischen Dämpfer (38b) und/oder einem magnetorheologischen Dämpfer gebildet ist.

10. Vorrichtung nach einem der vorhergehenden Ansprüche, **dadurch gekennzeichnet, dass** die Steuereinheit (40a-b) zur Ausführung eines Trainingsprogramms vorgesehen ist, bei dem einer langsamen Absenkung der Dämpfungsstärke der Dämpfungseinheit (20a - b) durch eine Zunahme einer Auslenkungsamplitude der Plattform (12a-b) einer rasche Erhöhung der Dämpfungsstärke überlagert wird.

11. Vorrichtung nach einem der vorherigen Ansprüche, **dadurch gekennzeichnet, dass** das zentrale Verbindungselement (22a-b) zu einer Dämpfung der Bewegung der Plattform (12a-b) mittels äußerer Reibung vorgesehen ist.

12. Verwendung einer Vorrichtung (10a-b) nach einem der vorhergehenden Ansprüche zum Gleichgewichts- und/oder feinmotorischen Training.

13. Verwendung nach Anspruch 11 unter Bedingungen reduzierter Schwerkraft.

14. Verwendung nach einem der Ansprüche 1 - 11 in Zusammenwirkung mit einer Spielkonsole (44a-b).

15. Verwendung nach Anspruch 14 unter Bedingungen reduzierter Schwerkraft.

16. Verwendung einer Vorrichtung (10a-b) nach einem der vorhergehenden Ansprüche, **dadurch gekennzeichnet, dass** einer langsamen Absenkung der Dämpfungsstärke der Dämpfungseinheit (20a - b) durch eine Zunahme einer Auslenkungsamplitude der Plattform (12a-b) eine rasche Erhöhung der Dämpfungsstärke überlagert wird.

## Claims

1. Training device, in particular for balance training and/or fine motor skills training, with at least one moveable platform (12a-b), which is in at least two dimensions oscillatingly moveable, with at least one damping unit (20a-b) for a damping of movements of the moveable platform (12a-b), wherein the damping unit (20a-b) comprises a central connecting element (22a-b), which extends at least partially along a zero axis (30a-b) of a rest position of the platform (12a-b), for a connection of the platform (12a-b) and the damping unit (20a-b) and for a transfer of an at least two-dimensional movement of the platform (12a-b), and wherein the central connecting element (22a-b) transfers the at least two-dimensional movement of the platform (12a-b) onto the damping unit (20a-b) in a one-dimensional fashion, **characterised by** an adjustment unit (34a-b), which is configured for an adjustment of a damping degree, wherein the adjustment unit (34a-b) comprises a control unit (40a-b) and the control unit (40a-b) is configured to adjust the damping degree depending on measurement values of at least one sensor (42a-b) for a measurement of a deflection, in particular any deflection, of the platform (12a-b).

2. Device according to claim 1, **characterised in that** the damping unit (20a-b) comprises at least one movement conversion unit (24a-b), which converts a rotary component of the at least two-dimensional movement of the platform (12a-b) into a rotary movement of the central connecting element (22a-b) around its axis.

3. Device according to claim 2, **characterised in that** the movement conversion unit (24a-b) comprises a sleeve or a bore (26a-b) with a rounded opening.

4. Device according to one of the preceding claims, **characterised in that** the central connecting element (22a-b) is embodied at least partially by a rope element.

5. Device according to one of the preceding claims, **characterised in that** the damping unit (20a-b) comprises at least one spring element (32a).

6. Device according to claim 5, **characterised by** a sleeve element (28a-b) for a connection of the central connecting element (22a-b) and the spring element (32a), said sleeve element (28a-b) permitting a rotation of the central connecting element (22a-b) around its axis.

7. Device according to one of the preceding claims, **characterised in that** the adjustment unit (34a) comprises an electrical actuator (36a).

8. Device according to one of the preceding claims, **characterised in that** the damping unit (20b) comprises a directly adjustable damping element.

9. Device according to claim 8, **characterised in that** the directly adjustable damping element is implemented by an electro-rheological damper (38b) and/or a magnetorheological damper.

10. Device according to one of the preceding claims, **characterised in that** the control unit (40a-b) is configured for carrying out a training program, in which a slow reduction of the damping degree of the damping unit (20a-b) due to an increase of a deflection amplitude of the platform (12a-b) is superimposed by a quick raising of the damping degree.

11. Device according to one of the preceding claims, **characterised in that** the central connecting element (22a-b) is configured for a damping of the movement of the platform (12a-b) by external friction.

12. Usage of a device (10a-b) according to one of the preceding claims for balance training and/or fine motor skills training.

13. Usage according to claim 11 under reduced-gravity conditions.

14. Usage according to one of claims 1-11 in cooperation with a games console (44a-b).

15. Usage according to claim 14 under reduced-gravity conditions.

16. Usage of a device (10a-b) according to one of the preceding claims, **characterised in that** a slow reduction of the damping degree of the damping unit (20a-b), due to an increase of a deflection amplitude of the platform (12a-b), is superimposed by a quick raising of the damping degree.

## Revendications

1. Dispositif d'entraînement,
notamment d'entraînement de l'équilibre et/ou de la motricité fine, avec au moins une plate-forme mobile (12a-b), laquelle est mouvable de façon oscillante dans au moins deux dimensions,
avec au moins une unité amortisseur (20a-b) pour un amortissement des mouvements de la plate-forme mobile (12a-b), l'unité amortisseur (20a-b) comprenant un élément connectif central (22a-b) s'étendant au moins partiellement, le long d'un axe zéro (30a-b) d'une position de repos de la plate-forme (12a-b), pour un raccordement de la plate-forme (12a-b) et l'unité amortisseur (20a-b) et pour un transfert d'un mouvement au moins bidimensionnel de la plate-forme (12a-b), l'élément central connectif (22a-b) transférant le mouvement au moins bidimensionnel de la plate-forme (12a-b) à l'unité amortisseur (20a-b) de façon unidimensionnelle,
**caractérisé par** une unité d'ajustement (34a-b) prévue pour un ajustement d'une intensité amortisseur, l'unité d'ajustement (34a-b) comprenant une unité de commande (40a-b) et l'unité de commande (40a-b) étant prévue pour ajuster l' intensité amortisseur, en fonction de valeurs de mesure d'au moins un capteur (42a-b) pour une mesure d'une déflexion, en particulier une déflexion quelconque, de la plate-forme (12a-b).

2. Dispositif selon la revendication 1, **caractérisé en ce que** l'unité amortisseur (20a-b) comporte au moins une unité à conversion de mouvement (24a-b), qui convertit une composante rotative du mouvement au moins bidimensionnel de la plate-forme (12a-b) en un mouvement rotatif de l'élément connectif central (22a-b) autour de son propre axe.

3. Dispositif selon la revendication 2, **caractérisé en ce que** l'unité à conversion de mouvement (24a-b) comporte une douille ou un perçage (26a-b) avec une aperture arrondie.

4. Dispositif selon l'une quelconque des revendications précédentes, **caractérisé en ce que** l'élément connectif central (22a-b) est implémenté au moins partiellement d'un élément de corde.

5. Dispositif selon l'une quelconque des revendications précédentes, **caractérisé en ce que** l'unité amortisseur (20a-b) comporte au moins un élément de ressort (32a).

6. Dispositif selon la revendication 5, **caractérisé par** un élément de douille (28a-b) pour un raccordement de l'élément connectif central (22a-b) et l'élément de ressort (32a), ledit élément de douille (28a-b) rendant possible une rotation de l'élément connectif central (22a-b) autour de son propre axe.

7. Dispositif selon l'une quelconque des revendications précédentes, **caractérisé en ce que** l'unité d'ajustement (34a) comporte un actionneur électrique (36a).

8. Dispositif selon l'une quelconque des revendications précédentes, **caractérisé en ce que** l'unité amortisseur (20b) comporte un élément amortisseur, qui est ajustable directement.

9. Dispositif selon la revendication 8, **caractérisé en ce que** l'élément amortisseur, qui est ajustable directement, est implémenté d'un amortisseur électro-rhéologique (38b) et/ou un amortisseur magnéto-rhéologique.

10. Dispositif selon l'une quelconque des revendications précédentes, **caractérisé en ce que** l'unité de commande (40a-b) est prévue pour une mise en oeuvre d'un programme d'entraînement, dans lequel une réduction lente, par le biais d'un accroissement d'une amplitude de déflexion de la plate-forme (12a-b), de l'intensité amortisseur de l'unité amortisseur (20a-b) est superposée par une augmentation rapide de l'intensité amortisseur.

11. Dispositif selon l'une quelconque des revendications précédentes, **caractérisé en ce que** l'élément connectif central (22a-b) est prévu pour un amortissement du mouvement de la plate-forme (12a-b) par friction externe.

12. Usage d'un dispositif (10a-b) selon l'une quelconque des revendications précédentes pour un entraînement de l'équilibre et/ou de la motricité fine.

13. Usage selon la revendication 11 sous conditions de gravité réduite.

14. Usage selon l'une quelconque des revendications 1-11 en coopération avec une console de jeux (44a-b).

15. Usage selon la revendication 14 sous conditions de gravité réduite.

16. Usage d'un dispositif (10a-b) selon l'une quelconque des revendications précédentes, **caractérisé en ce qu'**une réduction lente, par le biais d'un accroissement d'une amplitude de déflexion de la plate-forme (12a-b), de l'intensité amortisseur de l'unité amortisseur (20a-b) est superposée par une augmentation rapide de l'intensité amortisseur.
